(19) **Europäisches Patentamt European Patent Office Office européen des brevets**

(11) **EP 1 119 979 B1**

(12) **EUROPEAN PATENT SPECIFICATION**

(45) Date of publication and mention
of the grant of the patent:
**23.01.2013 Bulletin 2013/04**

(21) Application number: **99945310.3**

(22) Date of filing: **27.08.1999**

(51) Int Cl.:
***H04N 7/50*** (2006.01)          ***H04N 7/26*** (2006.01)
***H04N 5/14*** (2006.01)

(86) International application number:
**PCT/US1999/019804**

(87) International publication number:
**WO 2000/019726 (06.04.2000 Gazette 2000/14)**

(54) **METHOD AND APPARATUS FOR DETECTING SCENE CHANGES AND ADJUSTING PICTURE CODING TYPE IN A HIGH DEFINITION TELEVISION ENCODER**

VERFAHREN UND VORRICHTUNG ZUR ERKENNUNG VON SZENENWECHSELN UND ANPASSUNG DES BILDCODIERUNGSTYPS IN EINEM HOCHAUFLÖSENDEN FERNSEHCODER

TECHNIQUE ET DISPOSITIF PERMETTANT DE DETECTER DES MODIFICATIONS SCENIQUES ET D'ADAPTER LE TYPE DE CODAGE D'IMAGE DANS UN CODEUR DE TELEVISION HAUTE DEFINITION

(84) Designated Contracting States:
**AT BE CH CY DE DK ES FI FR GB GR IE IT LI LU MC NL PT SE**

(30) Priority: **29.09.1998 US 102234 P**

(43) Date of publication of application:
**01.08.2001 Bulletin 2001/31**

(73) Proprietor: **GENERAL INSTRUMENT CORPORATION**
**Horsham, Pennsylvania 19044 (US)**

(72) Inventor: **WU, Siu-Wai**
**San Diego, CA 92131 (US)**

(74) Representative: **Beck, Jürgen**
**HOEGER, STELLRECHT & PARTNER**
**Patentanwälte**
**Uhlandstrasse 14 c**
**70182 Stuttgart (DE)**

(56) References cited:
**EP-A- 0 554 086      EP-A- 0 708 564**
**WO-A-97/39577      US-A- 5 343 248**
**US-A- 5 508 750**

**Description**

**BACKGROUND OF THE INVENTION**

This application claims the benefit of U.S. Provisional Application No. 60/102,234, filed September 29, 1998.
The present invention relates to video compression, and more particularly to a method and apparatus for detecting scene changes and adjusting the picture coding type to optimize the coding efficiency of a video encoder. The invention is particularly useful for picture coding type decision and scene change detection in a digital HDTV encoder.
Aligning intra-coded (I) frames with scene changes can significantly improve the coding efficiency of an MPEG (Moving Picture Expert's Group) video encoder. In the past, such scene change detection has been provided, for example, by detecting variations in luminance values.
In some existing scene change detection proposals, the coding of an I-frame is avoided until the scene change is over and a new GOP (group of pictures) is started. However, scene change detection is performed on a frame-by-frame basis. Therefore, this approach can yield incorrect results where there are bad edits, special effects or camera flashes, where the scene change might occur on the odd/even field boundary of the same frame.
Accordingly, it would be advantageous to provide a system for detecting scene changes, including flashes, or bad fields that result from improper editing, and adjusting the picture coding type without the aforementioned problems encountered by the prior art. It would be further advantageous to better optimize the coding efficiency of a video encoder during scene changes. It would also be desirable to provide an efficient system for scheduling a new GOP based on the detection of a scene change. Moreover, the system should detect scene changes between successive fields.
The system should make use of an encoding processing pipeline architecture that provides the required lookahead delay to avoid issuing a scheduled I-frame at the proximity of a scene change, while minimizing the amount of frame buffer memory required to provide the lookahead capability.
The scheme should be compatible with different HDTV modes/pixel resolutions, including 1920x1080 I (interlaced scan), 1440x1080 I, and 1280x720 P (progressive scan), as well as standard definition (SDTV) video.
The system should be compatible with any digital video coding scheme, including MPEG-2.
The system should inhibit the encoding of I-frames when an encoder buffer level is too high.
The system should provide a watchdog counter that resets the scene change indication to avoid a perpetual scene change state for transitions from still to motion.
For an MPEG film mode frame picture that is determined to be a scene change frame, to improve coding accuracy and efficiency, the system should deactivate the MPEG-recommended frame-based Discrete Cosine Transform (DCT) and prediction encoding when a scene change may have occurred on a field boundary.
The present invention provides a scene change and adjustment scheme having the aforementioned and other advantages.
EP0708564 A2 discloses a video encoder where scene change is detected from the sums of absolute values of differences between pixels of successive input fields of the same parity, and a scene change is determined when at least two high field differences are detected which are preceded and succeeded by relatively low field differences.

**SUMMARY OF THE INVENTION**

The present invention relates to an efficient video compression scheme that detects scene changes between successive fields, including flashes, or bad fields that result from improper editing, and adjusts the picture coding type and GOP boundaries in response thereto. The term "scene change" is thus used generally herein to encompass events including a normal scene change (at a frame boundary), a scene change at a field boundary of the same frame, a bad edit or flash, or any other sudden change in a sequence of video images.
In accordance with the present invention, scene change detection is performed at a preprocessing stage of a video encoder. The final decision to encode a frame as an I- or P-frame is not made until a final encoding stage. That is, the encoder's processing pipeline is used as a lookahead buffer to minimize the amount of required frame buffer memory.
In particular, the preprocessing stage of the video encoder calculates a change in the sum of pixel differences between consecutive odd fields, or consecutive even fields, for every consecutive input field. A scene change is then detected by looking for a large positive value (exceeding a positive threshold) in the change in sum, followed by a large negative value (less than a negative threshold).
I-frames are inhibited at the encoding stage of the processing pipeline as soon as a scene change is detected. A new GOP is started when a scene change frame arrives at the encoding stage of the pipeline, and there is no other scene change frame in the pipeline.
A scene change counter is used to keep track of the number of uncoded scene change frames currently in the processing pipeline. I-frames are prohibited for as long as the scene change counter has a value greater than zero, except for the last scene change frame in a burst (succession) of scene change frames.

Additionally, a scene change countdown counter, or "watchdog" counter, is used to account for a transition from a still frame to a motion frame to ensure that a scene change is not set permanently.

Moreover, for an MPEG film mode picture that is determined to be a scene change frame, the MPEG-recommended frame-based Discrete Cosine Transform (DCT) and prediction encoding is deactivated when a scene change is indicated at a field boundary (e.g., when there is no redundant field in the picture). Upon such deactivation, either frame- or field-based DCT and prediction can be use on a macroblock-by-macroblock basis in the picture. This allows field prediction to be used to handle bad edits where a scene change may occur at the odd/even field boundary of the same frame.

The invention is suitable for use with both high definition television (HDTV) encoders and standard definition television (SDTV) encoders.

## BRIEF DESCRIPTION OF THE DRAWINGS

FIG. 1 is a block diagram illustrating an HDTV encoder in accordance with the present invention.

FIG. 2 illustrates a video encoder processing pipeline in accordance with the present invention.

FIG. 3 illustrates a flowchart for determining scene change score deltas, the most recently used scene change score, and the number of consecutive repeat fields in accordance with the present invention.

FIG. 4 illustrates a flowchart for determining a scene change detected frame, and activating a scene change countdown timer, in accordance with the present invention.

FIG. 5 illustrates a flowchart for setting a scene change flag in accordance with the present invention.

FIG. 6 illustrates a flowchart for determining the final picture coding type for a frame in accordance with the present invention.

## DETAILED DESCRIPTION OF THE INVENTION

The present invention relates to an efficient video compression scheme that detects scene changes between successive fields, and adjusts the picture coding type and GOP boundaries in response thereto.

The following terminology is used:

| Term: | Description: |
| --- | --- |
| CountDown | Number of remaining frames until ScDet is set to false (for still-to-moving transition sequences); |
| d1 | Delta in consecutive scene change scores for first field; |
| d2 | Delta in consecutive scene change scores for second field; |
| FrameCount | Number of frames encoded so far in the GOP; |
| GopLen | Nominal GOP length; |
| maxCount | Maximum allowed number of consecutive repeat fields; |
| MaxGopLen | Maximum allowed GOP length; |
| picture_type | Picture type, possibly modified based on scene change detection; |
| preType | Pre-picture type - nominal assigned picture type; |
| rfc | Repeat field count - number of consecutive repeat fields; |
| sc1 | Scene score 1 - scene change metric for first field; |
| sc2 | Scene score 2 - scene change metric for second field; |
| ScCount | Scene change count - number of scene change frames currently in the processing pipeline; |
| ScDet | Scene change frame detected; |
| scene_change | Scene change frame declared; |
| scLast | Last scene_score; |
| ScPending | Scene change pending; |
| start_new_gop | Start a new GOP with current frame; |
| Th0 | Zer o threshold for scene scores sc1, sc2; |
| ThBuf | buffer level threshold that is used to determine whether a new GOP can be started; |
| ThNeg | Negative threshold for scene scores sc1, sc2; and |
| ThPos | Positive threshold for scene scores sc1, sc2. |

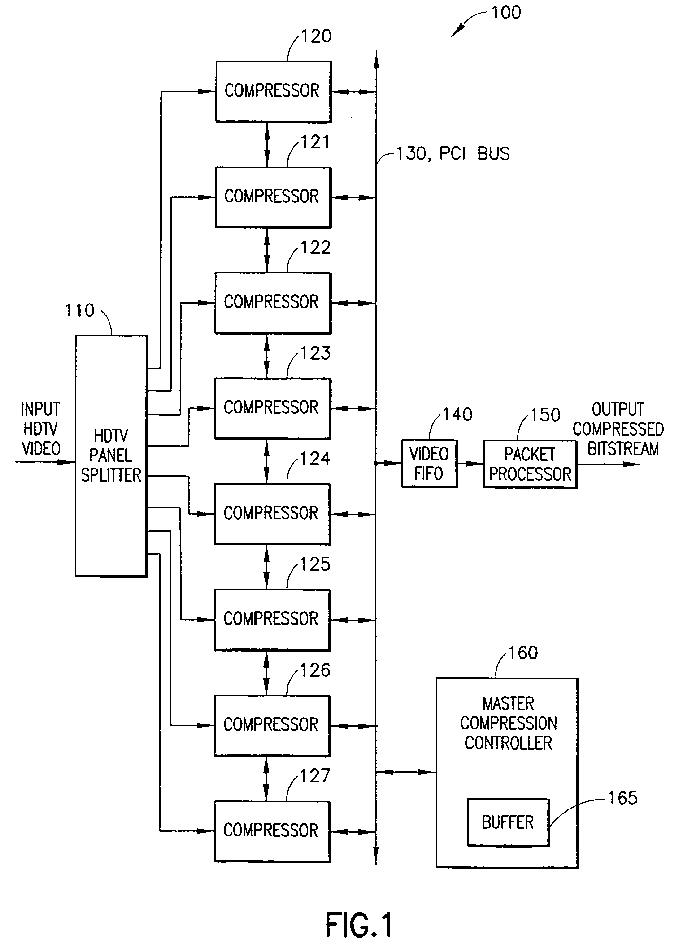

FIG. 1 is a block diagram illustrating an HDTV encoder in accordance with the present invention.

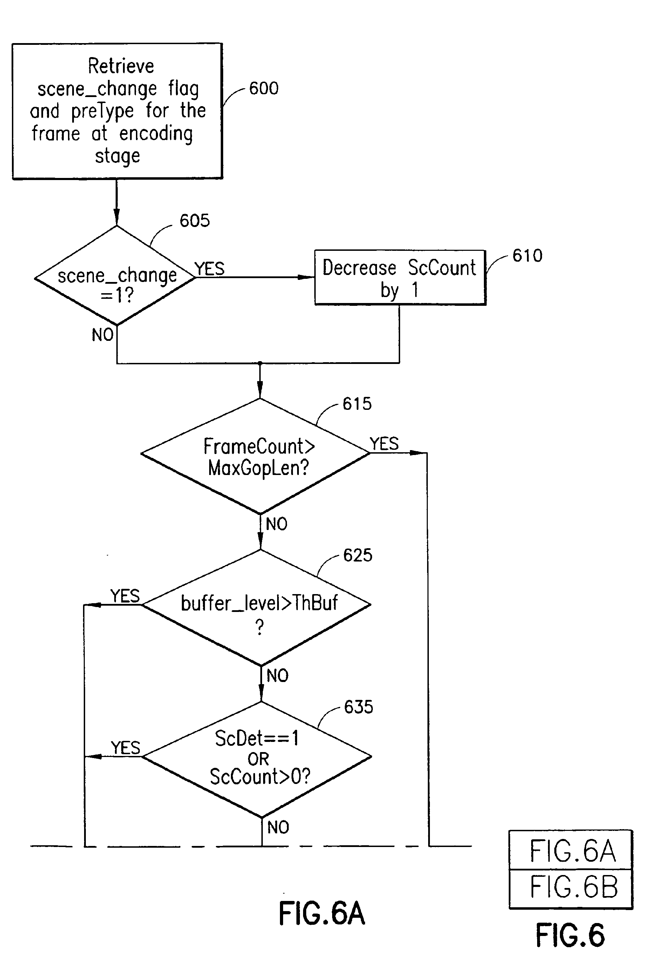

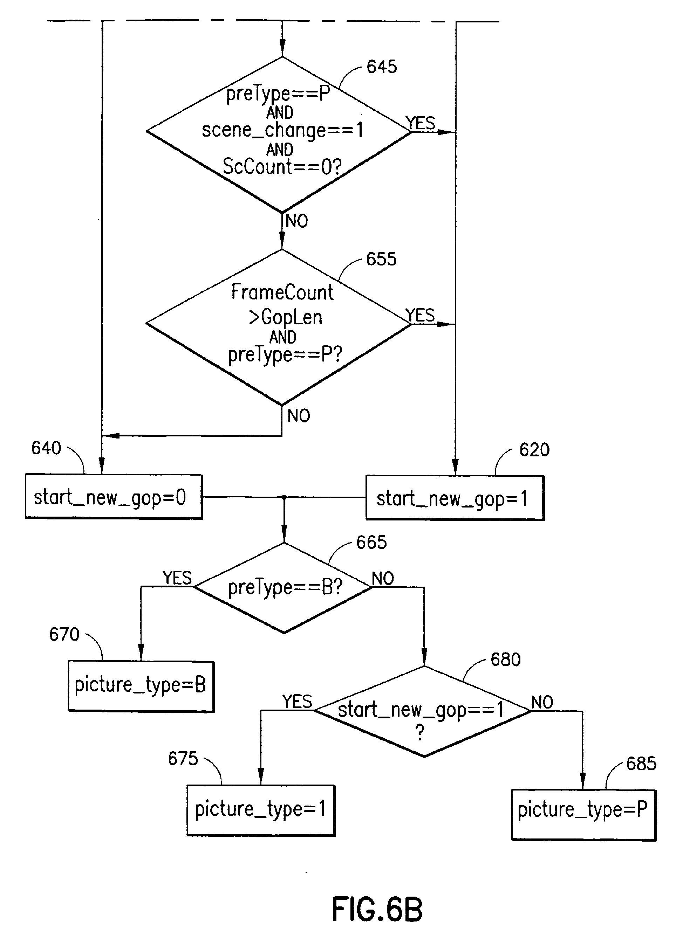

The encoder 100 includes a HDTV panel splitter 110 that receives an input HDTV video stream. The splitter 110 splits the data among eight separate video compressors 120-127. The compressors 120 communicate with a Peripheral Component Interconnect (PCI) bus 130. A video buffer 140 (such as a first-in, first-out, or FIFO buffer) receives the compressed video data from the bus and provides it to a packet processor 150 to provide an output compressed bitstream. A Master Compression Controller (MCC) 160, which includes a circular buffer 165, controls the flow of data and synchronizes the video compressors 120-127. The function of the buffer 165 is discussed further in connection with FIG. 6.

Note that the invention is illustrated in a multi-compressor HDTV embodiment, but can be used with SDTV data as well. Moreover, the use of eight compressors 120-127 is an example only, as any number of compressors may be used.

The input HDTV picture is split into eight panels. Each panel is processed by a video compression engine. The compression engines 120-127 dump the compressed video data into the video buffer 140. The Packet Processor 150 pulls the compressed data from the buffer 140 at a rate determined by the configured output bandwidth, and packetizes the data into MPEG transport packets, for example.

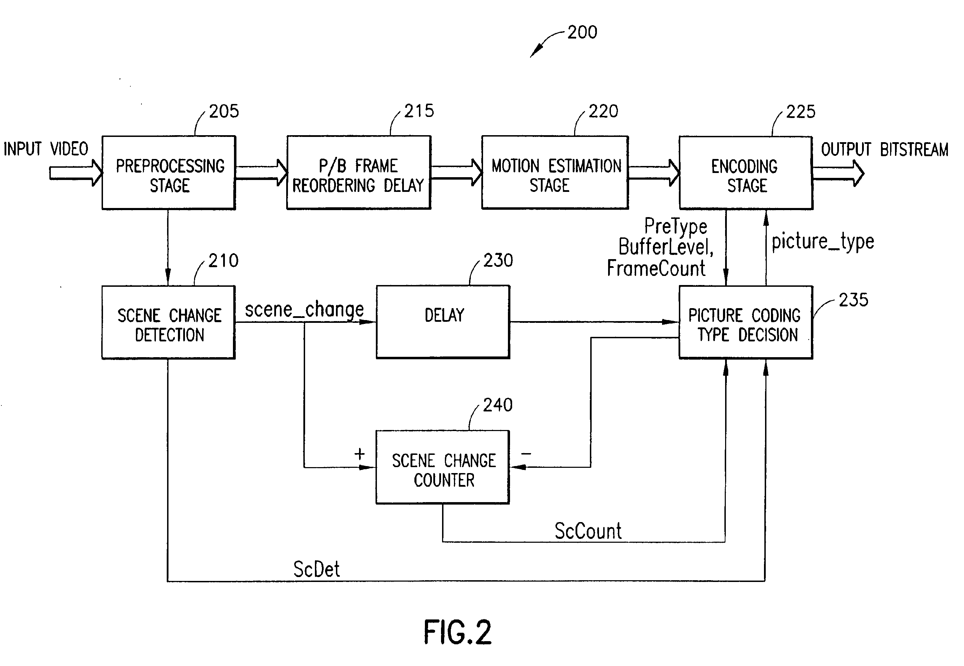

FIG. 2 illustrates a video encoder processing pipeline in accordance with the present invention. The video compressors 120-127 process the video frames using a pipeline architecture 200. The first stage of the pipeline 200 includes a preprocessing stage 205, which performs video filtering, downsampling (optional), and calculates the statistics for use in a detelecine and scene change detection function 210.

Subsequent stages of the pipeline 200 include a P/B frame reordering delay function 215 that delays and reorders the video frames. This is done since P-frames are sometimes encoded out of display order for use in predicting the B-frames. A motion estimation stage 220 carries out motion estimation. The final stage includes an encoding stage 225 for performing the actual encoding of the video frames to provide an output bit stream.

To facilitate the subsequent stages of reordering and motion estimation, the preprocessing stage 205 determines whether or not a preprocessed frame is a B-frame. If a frame is not classified as a B frame, the encoder (encoding stage 225) determines whether it is an I- or P-frame at the final stage of the pipeline, just before the picture is actually encoded. A new GOP is started by an I-frame.

The scene change detection function 210 detects scene changes between consecutive frames at the preprocessing stage of the pipeline. The main objective of scene change processing is to change the location of the scheduled start of a new GOP to align with the start of the new scene if a scene change is detected at the proximity of the originally scheduled I-frame. Once a scene change is detected at the scene change detection function 210, a control signal (ScDet flag) is sent to the encoding stage 225 to prevent it from generating I-frames for frames that are currently in the encoder's processing pipeline waiting to be encoded. When the corresponding scene change frame subsequently arrives at the encoding stage 225, it is encoded as an I-frame, assuming there are no other scene change frames in the pipeline, in which case the last scene change frame in the pipeline is encoded as an I-frame.

In particular, the scene change flag is provided to a delay 230 to account for the delays in processing the corresponding frame in the reordering delay function 215 and motion estimation stage 220, and to a picture coding type decision function 235.
The function 235 sends a corresponding picture_type control signal to the encoding stage 225 to set the picture type of the current frame to be encoded.

In the event that multiple scene changes are detected in a row in successive frames (e.g. camera flashes, special effects, bad frame/field created by improper edit), the start new GOP decision function 235 waits to send the start new GOP control signal to the encoding stage 225. Thus, the encoding stage 225 waits to encode an I-frame and start a new GOP until the last scene change is over.

This is different from prior art schemes that perform both scene change detection and picture coding type decision at the preprocessing stage, thereby requiring a large amount of lookahead frame buffer, or perform both scene change detection and picture coding type decision at the encoding stage, which does not provide any lookahead capability. Advantageously, the pipeline architecture 200 provides the required lookahead delay to avoid issuing a scheduled I-frame at the proximity of a scene change, while minimizing the amount of frame buffer memory required to provide the lookahead capability.

A scene change counter 240 maintains a count, *ScCount,* of the number of scene change frames in the pipeline 200. The count is incremented for each new scene change frame that is designated at the scene change detection function 210, and decremented for every scene change frame that reaches the picture coding type decision function 235.

The preliminary picture type information *(preType)* is determined by the preprocessing stage 205 and tagged to the video frame throughout the pipeline 200. This information is retrieved for use in determining the final picture type *(picture_type)* to be used when the frame arrives at the encoding stage 225. Essentially, the pre-assigned picture type of a frame may be modified in accordance with the present invention when a scene change is detected, as discussed further in "Scene Change Examples", below.

For every preprocessed frame, the scene change detection function 210 calculates the absolute differences between pixels of the corresponding panel of the current input frame and previous input frame. These absolute differences are summed over the first and second fields and scaled to fit into a 16-bit unsigned integer to form a pair of scene change metrics, namely *sc1* (for the first field) and *sc2* (for the second field). It is possible to generate the scene change metric from a subset of input pixels to simplify implementation, e.g., by spatially down-sampling the frame prior to calculating the scene change metrics. The scene change detection functions 210 may be implemented by having the MCC 160 read the scene change measures from the video compressors 120-127 to detect a scene change. Based on the results of scene change detection, the encoder's output video FIFO level, and the number of frames coded so far in the GOP, the picture coding type decision function 235 (which may be implemented by the MCC 160) makes a final decision for the picture coding type of the frame at the encoding stage 225 of the processing pipeline.

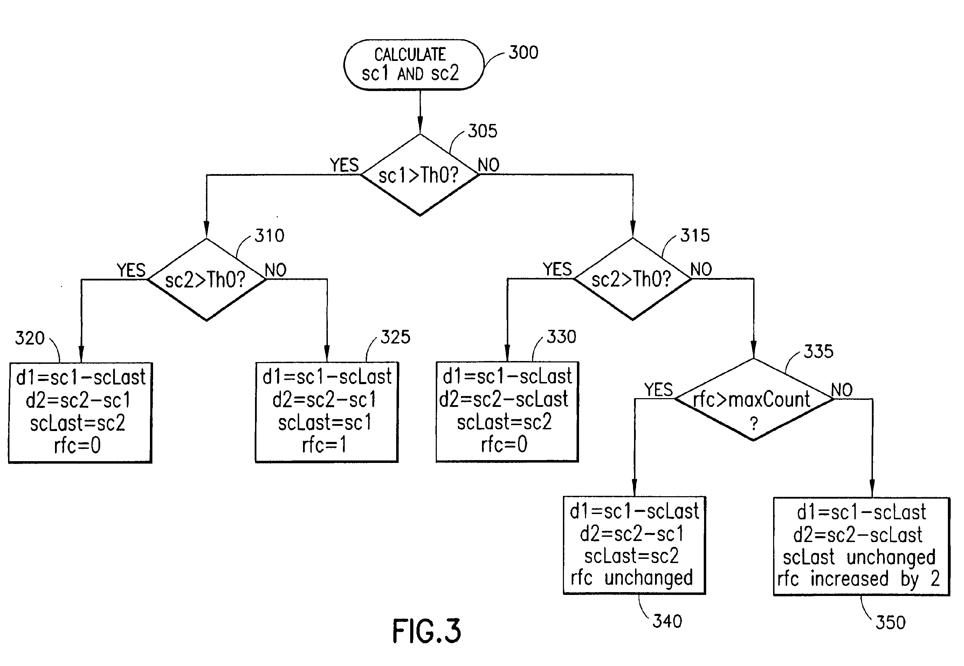

FIG. 3 illustrates a flowchart for determining scene change score deltas, the most recently used scene change score, and the number of consecutive repeat fields in accordance with the present invention.

To detect a scene change, the scene change detection function 210, implemented by the MCC 160, first calculates the scene change scores sc1 and sc2 for the entire odd field and even field of each frame by summing the MAD values over all panels in the frame (block 300).

The scene change detection function 210 detects a scene change by looking for an abrupt increase in the scene scores followed by an abrupt decrease. At block 305, sc1 > a threshold value *Th0* is tested, and at blocks 310 and 315, *sc2 > Th0* is tested.

*d1, d2, scLast* and *rfc* are set as indicated at block 320 when both *sc1* and *sc2* exceed *Th0,* or at block 325 when *sc1* exceeds *Th0* but *sc2* does not, or at block 330 when *sc2* exceeds *Th0* but *sc1* does not. At block 335, a determination is made as to whether the number of consecutive repeat fields (*rfc*) exceeds the maximum value (*maxCount*). *d1, d2, scLast* and *rfc* are set accordingly at blocks 340 and 350 if block 335 is true or false, respectively.

In the figures and text herein, "yes", "true" and "1" are synonymous, while "no", "false" and "0" are synonymous.

Generally, there are three thresholds defined {*ThPos, ThNeg, Th0*}, whose values depend on the video format as follows:

|  | 1920x1080 I | 1440x1080 I | 1280x720 P |
|---|---|---|---|
| *ThPos* | 24,480 | 17,952 | 10,240 |
| *ThNeg* | -16,320 | -11,968 | -5,120 |
| *Th0* | 6,120 | 4,488 | 1,920 |

The video format refers to the horizontal x vertical pixel resolution, and whether the video is interlaced-scan (I) or progressive-scan (P). This notation should not be confused with the I- and P-frame types. The meaning should be clear from the context. The invention accommodates both interlaced-scan and progressive-scan frames. Progressive scan images are processed in first and second fields. These are suggested thresholds only, and their values may adjusted, e.g., by experimentation with different video sequences.

The scene change detection function 210 calculates the differences, d1 and d2, between consecutive scene change scores for both the first and second input fields, respectively. The most recently used scene change score is maintained by the variable *scLast.* Repeated fields up to a maximum count (maxCount) are skipped when calculating the differences d1 and d2.

The variable *rfc* is maintained to keep track of the number of consecutive repeat fields. The maximum number of consecutive repeat fields, *maxCount,* can be set, e.g., to fourteen fields for 1080 I mode, and twenty-four fields for 720 P mode. However, other values can be used. Whenever *rfc* exceeds *maxCount* (box 335), it is assumed that there is a true still picture so that *d1*, *d2*, and *rfc* are updated normally (box 340).

*d1* is calculated as the difference between *sc1* and *sc2.* d2 is calculated as the difference between *sc2* and either *sc1* or *scLast,* depending on whether the scene scores are above *Th0* and *rfc* is smaller than the maximum count.

Small scene change scores for up to the maximum count (*maxCount*) are excluded (blocks 325, 330 and 350) to avoid false detection when there are repeated fields, e.g., in cartoons, slow motion edits, and bad films that fail the detelecine processing. Detelecine processing refers to removing the redundant fields in a 3:2 pulldown video sequence. If the telecine process (transfer from film to video) is noisy, the encoder's detelecine process may not be able to detect the redundant fields.

Another scenario is when the encoder deliberately maintains the redundant field as commanded by the user (e.g., if the user deliberately disables the detelecine process on the encoder), or at edit points where a redundant field may not be dropped (e.g. when there are redundant fields in two consecutive frames). There are also special films which do not follow the regular 3:2 pulldown pattern, e.g., 3:3:2:2 instead of 3:2:3:2.

In the case of a 3-field film frame, we only check for a scene change between the first and second fields, because the third field is dropped at the encoder.

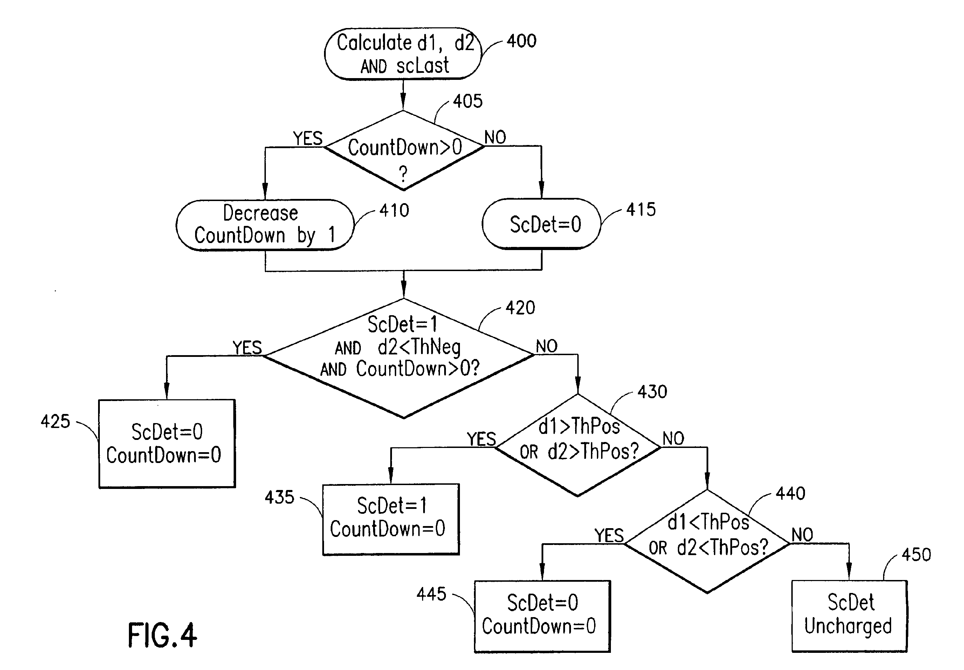

FIG. 4 illustrates a flowchart for determining a scene change detected frame, and activating a scene change countdown timer, in accordance with the present invention.

At block 400, *d1,* d2 and *scLast* are calculated as explained in connection with box 320, 325, 330, 340 or 350 in FIG. 3.

The MCC maintains the flag *ScDet* that indicates a scene change has happened. *ScDet* is set to true (i.e., one) (block 435) whenever the changes in the scene scores (*d1* or d2) exceed a positive threshold (block 430). *ScDet* is reset to zero (blocks 425 and 445) whenever the changes in *d1* and *d2* are negative, and are less than a negative threshold (block 440). *ScDet* is unchanged (block 450) when *d1* and *d2* are near *Th0,* that is, neither *d1* nor d2 exceeds *ThPos* or is less than *ThNeg.*

A watchdog counter, *CountDown,* is maintained to keep track of the number of frames elapsed since the last time the scene scores exceed the positive threshold. The counter is decremented by one for every frame thereafter (block 410) until it reaches zero (block 405). *ScDet* is reset to zero when the counter reaches zero (block 415). This mechanism forces *ScDet* to reset in case a large negative change in scene score does not follow a large positive surge, which may happen when objects begin to move in a still image (i.e., in a still-to-motion sequence).

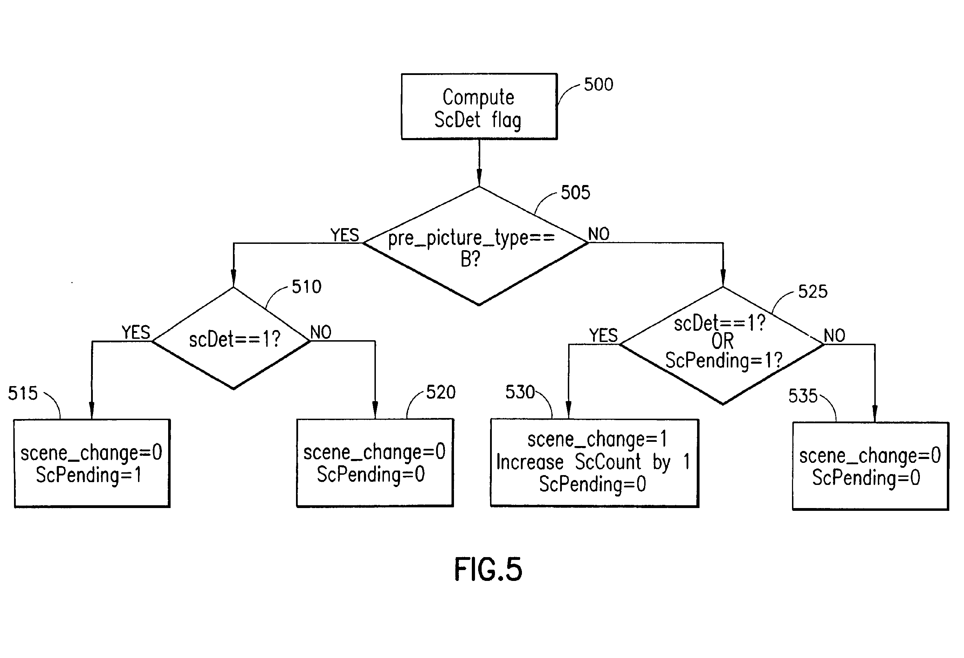

FIG. 5 illustrates a flowchart for setting a scene change flag in accordance with the present invention.

*ScDet* is determined at block 500 as discussed in connection with blocks 415, 425, 435, 445 and 450 in FIG. 4.

The MCC uses the preliminary picture type (B-frame or not B-frame) (block 505) determined at the preprocessing stage 205 of the encoding pipeline 200 to indicate that a new GOP may start at the current frame. If a scene change is detected on a pre-processed B-frame (block 510), *ScPending* is set to true, but a scene change for the B-frame is not set (block 515). If a scene change is not detected on a preprocessed B-frame (block 510), *ScPending* and the scene_ change flag for the B-frame are set to false (block 520).

For the next P-frame that follows the pre-processed B-frame, where *ScDet* or *ScPending* is true (block 525), the scene change flag is set to true (block 530). For the next P-frame that follows the pre-processed B-frame, where neither *ScDet* nor *ScPending* is true (block 525), the scene change flag is set to false (block 535).

Thus, the MCC keeps track of the number of scene changes currently in the processing pipeline by a *ScCount.* The value of *ScCount* increases by one (block 530) if the *scene_change* flag is set, and decreases by one (block 610 in FIG. 6) if the current picture at the encoding stage is a scene change frame. The *scene_change* flag and the *preType* of the preprocessed frame are stored in the circular buffer 165 of the MCC 160, and are retrieved later to determine the final picture type when the frame is encoded. The circular buffer 165 is indexed by a temporal reference tag which is sequence number that indicates the input order of each frame. Note that the input to the circular buffer 165 is in display order, while the output is in coding order (after B/P frame reordering).

FIG. 6 illustrates a flowchart for determining the final picture coding type for a frame in accordance with the present invention.

When a frame arrives at the (final) encoding stage of the pipeline, the MCC retrieves the value of the *preType* and *scene_change* flag of the frame (block 600) from its circular buffer. This is performed for the frame to be encoded at the encoding stage 225 of the video compressor. *ScCount* is decreased by one (block 610) if *scene_change* for the current frame is set to true (block 605). These values are used to determine the final picture coding type (*picture_type*) of the frame in block 670, 675 or 685.

A count of the number of frames that has been encoded so far in the GOP (*FrameCount*) is maintained. A new GOP is started (block 620) by converting a P-frame into an I-frame (block 675) if the *FrameCount* reaches the user-configured nominal length of a GOP (*GopLen*) (block 655), or if a scene change is detected at the current frame and there is no other scene change frame currently in the processing pipeline (as indicated by *ScCount*=false) (block 645).

However, even if the above conditions are satisfied, a new GOP is not started (block 640) if a scene change is detected on any of the uncoded frames in the encoding pipeline (block 635), or if there is not enough space in the bitstream buffer 140 (FIG. 1) to accommodate an I-frame (block 625). An exception is when the *FrameCount* exceeds the maximum allowable length of a GOP (*MaxGopLen*) (block 615), in which case a new GOP is started regardless (block 620).

At block 665, if the *preType* is a B-frame, there is no change (block 670). If the *preType* is a P-frame, it is changed to an I-frame (block 675) when *start_new_gop* is true (block 680). If the *preType* is a P-frame, it is not changed (block 685) when *start_new_gop* is false (block 680). Note that I- and P-frames are treated the same throughout the pipeline until the encoding stage. It is not necessary to determine whether a frame is an I- or P-frame until the encoding stage.

The *start_new_gop* flag is used (blocks 620 and 640) to signal whether or not to start a new GOP with the current frame that is to be encoded. The final value of *start_new_gop* and *picture_type* is determined as shown in the flow chart.

The buffer level threshold that is used to determine whether a new GOP can be started or not is calculated as follows:

$$ThBuf = target\_buffer\_level + (0.5* GopLen * bit\_rate / frame\_rate).$$

The *target_buffer_level* is set to 1/6 of the *max_decoder_buffer_level* for 1920x1080 I mode, and 1/5 of the *max_decoder_buffer_level* for 1280*720 P mode. The *max_decoder_buffer_level* is the maximum number of bits that a decoder buffer that receives the encoded bitstream can hold. Furthermore, the value of *ThBuf* is capped to not exceed half of the *max_decoder_buffer_level.*

Scene Change Examples

Tables A-D show four possible scene change scenarios. Other scenarios are possible. In the scenarios, the following notation is used:

X1: first field of first scene X
X2: second field of first scene X
Y1: first field of second scene Y
Y2: second field of second scene Y
xx: sumMAD between fields in scene X
xy: sumMAD between fields in scene X and scene Y (assume that xy >> xx)
O: *ThNeg* < delta < *ThPos*
+ = delta > *ThPos*
- = delta < *ThNeg*

For example, in Table A, each frame has first and second fields. For Frames 1 and 2, X1 is the first field, and X2 is the second field. For Frames 3-5, Y1 is the first field, and Y2 is the second field. Thus, the boundary between scene X and scene Y is at Frame 3. Frame 3 is therefore a scene change frame (*ScDet*=1). The scene change frame is determined by observing the delta value. For Table A, delta transitions from "O" (indicating a small or zero value) to "+" (indicating a large positive value) at the first field (Y1) of Frame 3. Delta then transitions back to "O" at the second field (Y2) of Frame 3, and then to a large negative value (-) at the first field (Y1) of Frame 4, then back to a small or zero value (O) at the second field of Frame 4 and thereafter.

Note that for the following delta sequence O, O, O, +, O, O, O, ... *ScDet* would be set to "1" for the frame with the "+" delta value, and would remain at "1" for each following frames. The watchdog counter *(CountDown)* described above would cause *ScDet* to be set back to "O" after ten frames even if delta does not change to "-" to avoid remaining in a perpetual scene change state. This delta sequence could happen when an object begins moving in a still image. On the other hand, the delta sequence O, O, O, -, O, O, ... results when a motion scene stops and becomes a still picture. In this case, no false scene change will be detected.

As an example of the notation, in Table A, the "xx" notation for Frame 2, field X1, designates the sumMAD between X1 of Frame 1 and X1 of Frame 2. The "xy" notation for Frame 3, field Y1, designates the sumMAD between X1 of Frame 2 and Y1 of Frame 3. The "yy" notation for Frame 4, field Y1, designates the sumMAD between Y1 of Frame 3 and Y1 of Frame 4.

Case 1-A indicates resetting of the picture type based on the scene change detection for a frame sequence B, P, B, P, B. Specifically, in Frame 4, the P-frame is changed to an I-frame. This indicates the start of a new GOP.

Case 1-B indicates resetting of the picture type based on the scene change detection for a frame sequence P, B, P, B, P. Specifically, in Frame 3, the P-frame is changed to an I-frame.

Various other frames sequences are possible.

Note that *ScDet* is set for an entire frame, even though the detection is based on examining delta for each field.

In Table B, a scene change at the field boundary (between the first field X1 and the second field Y2) of Frame 3. X1 is part of scene X, and Y2 is part of the second scene Y.

Table C illustrates a bad edit, where X, Y and Z denote three separate scenes. A scene change is indicated for Frame 3, where Y1 is the first field of the scene Y, and X2 of Frame 2 is the last field of scene X. No scene change is detected for Frame 4 since the second field of Frame 3 (Z2) and the first field of Frame 4 (Z1) are part of the same scene (Z).

Table 4 illustrates a bad edit or flash. The first field of Frame 3 (Y1) is a flash or bad edit scene.

Generally, when a scene change frame is detected, and the scene change frame is a P-frame, it is changed to an I-frame. If the scene change frame is not a P-frame, the first P-frame following the scene change frame is changed to an I-frame.

Note that these cases show an open GOP, where each I- or P-frame is separate by one or more B-frames.

However, an open GOP is not required.

Table A - Normal Scene Change (at frame boundary):

|  | Frame 1 | | Frame 2 | | Frame 3 | | Frame 4 | | Frame 5 | |
|---|---|---|---|---|---|---|---|---|---|---|
| Input fields: | X1 | X2 | X1 | X2 | Y1 | Y2 | Y1 | Y2 | Y1 | Y2 |
| *SumMAD:* | xx | xx | xx | xx | xy | xy | yy | yy | yy | yy |
| *Delta* |  | O | O | O | + | O | - | O | O | O |
| *ScDet* |  |  | 0 |  | 1 |  | 0 |  | 0 |  |
| **case 1-A:** |  |  |  |  |  |  |  |  |  |  |
| *preType* | B |  | P |  | B |  | P |  | B |  |
| *picture_type* | B |  | P |  | B |  | I |  | B |  |
| **case 2-A:** |  |  |  |  |  |  |  |  |  |  |
| *preType* | P |  | B |  | P |  | B |  | P |  |
| *Picture_type* | P |  | B |  | I |  | B |  | P |  |

Table B - Scene Change at field boundary of the same frame:

|  | Frame 1 | | Frame 2 | | Frame 3 | | Frame 4 | | Frame 5 | |
|---|---|---|---|---|---|---|---|---|---|---|
| Input fields: | X1 | X2 | X1 | X2 | X1 | Y2 | Y1 | Y2 | Y1 | Y2 |
| *SumMAD:* | xx | xx | xx | xx | xx | xy | xy | yy | yy | yy |
| *delta* |  | O | O | O | O | + | O | - | 0 | 0 |
| *ScDet* |  |  | 0 |  | 1 |  | 0 |  | 0 |  |
| **case 1-B:** |  |  |  |  |  |  |  |  |  |  |
| *preType* | B |  | P |  | B |  | P |  | B |  |
| *picture_type* | B |  | P |  | B |  | I |  | B |  |
| **case 2-B:** |  |  |  |  |  |  |  |  |  |  |
| *preType* | P |  | B |  | P |  | B |  | P |  |
| *picture_type* | P |  | B |  | I |  | B |  | P |  |

Table C - Bad edits:

|  | Frame 1 | | Frame 2 | | Frame 3 | | Frame 4 | | Frame 5 | | Frame 6 | |
|---|---|---|---|---|---|---|---|---|---|---|---|---|
| Input fields: | X1 | X2 | X1 | X2 | Y1 | Z2 | Z1 | Z2 | Z1 | Z2 | Z1 | Z2 |
| *SumMAD:* | xx | xx | xx | xx | xy | xz | yz | zz | zz | zz | zz | zz |
| *delta* |  | O | O | O | + | + | + | - | O | O | O | O |
| *ScDet* |  |  | 0 |  | 1 |  | 0 |  | 0 |  |  |  |
| **case 1-C:** |  |  |  |  |  |  |  |  |  |  |  |  |
| *preType* | B |  | P |  | B |  | P |  | B |  | P |  |
| *picture_typ* e | B |  | P |  | B |  | I |  | B |  | P |  |
| **case 2-C:** |  |  |  |  |  |  |  |  |  |  |  |  |
| *preType* | P |  | B |  | P |  | B |  | P |  | P |  |

(continued)

case 2-C:

| *picture_ty pe* | P | B | I | B | P | B |
|---|---|---|---|---|---|---|

Table D - Bad edits or flashes:

| | Frame 1 | | Frame 2 | | Frame 3 | | Frame 4 | | Frame 5 | | Frame 6 | |
|---|---|---|---|---|---|---|---|---|---|---|---|---|
| Input fields: | X1 | X2 | X1 | X2 | Y1 | X2 | X1 | X2 | X1 | X2 | X1 | X2 |
| *SumMAD:* | xx | xx | xx | xx | xy | xx | xy | xx | xx | xx | xx | xx |
| *delta* | | O | O | O | + | - | + | - | O | O | O | O |
| *ScDet* | | 0 | | 1 | | 0 | | 0 | | 0 | | |

case 1-D:

| *preType* | B | P | B | P | B | P |
|---|---|---|---|---|---|---|
| *picture_typ* e | B | P | B | I | B | P |

case 2-D:

| *PreType* | P | B | P | B | P | B |
|---|---|---|---|---|---|---|
| *picture_ty pe* | P | B | I | B | P | B |

Frame_Pred_Frame_DCT decision:

MPEG-2 encoders use only frame-based prediction and DCT for film mode pictures. This is achieved by setting the flag frame_pred_frame_dct=1 in the bit stream syntax. If frame_pred_frame_dct=0, either field- or frame-based prediction and DCT can be used on a macroblock-by-macroblock basis for the picture.

Furthermore, MPEG-2 provides a repeat_first_field flag to signal, when set to one, that the current frame belongs to a film and contains a redundant first field such that the frame is composed by three input fields. Specifically, the first field (top or bottom field as identified by the MPEG value top_field_first) is followed by the other field, then the first field is repeated.

The present inventors have determined that, if a film frame contains a redundant first field *(repeat_first_field=1),* it is not likely that a scene change has occurred at a boundary between the odd and even fields of this frame. It is more likely that there was a clean scene change at a frame boundary. Therefore, frame_pred_frame_dct=1 is set according to the conventional MPEG-2 scheme, and the entire frame is encoded using frame-based DCT and prediction.

However, to handle the special case when a scene change has occurred at the odd-even field boundary of a film mode frame, the frame_pred_frame_dct flag is overridden in accordance with the present invention to allow either frame- or field-based prediction and DCT on a macroblock-by-macroblock basis. This improves coding efficiency, even with the increased overhead of the bits required to designate whether field- or frame-based prediction and DCT is being used for each macroblock, since the correlation of pre-scene change fields will be high, and the correlation of post-scene change fields will be high, but the correlation of a frame comprising both pre- and post-scene change fields with other frames comprising only pre- or post-scene change fields will be low.

Thus, when there is a bad edit in film mode frame, the encoder is not restricted to use only frame-based prediction and DCT on the transition frame.

Accordingly, if a scene change is detected on a particular frame, the value of the *frame_pred_frame_dct* flag is set to the same value as the *repeat_first_field* flag. Otherwise, the *frame_pred_frame_dct* flag is solely determined by the result of telecine detection such that frame_pred_frame_dct is set to true if film is detected, and set to zero if film is not detected.

It should now be appreciated that the present invention provide a system for detecting scene changes on a field-by-field basis, and adjusting the picture coding type to optimize the coding efficiency of a video encoder. By aligning I-frames with scene changes, the coding efficiency of an MPEG encoder is significantly improved. The invention is advantageous for both HDTV and SDTV signals. Upon detecting a scene change, including flashes, or bad fields that result from improper editing, the picture coding type is adjusted to optimize the coding efficiency of the video encoder the starting pictures of a new GOP (i.e., an I-frame) is aligned with a scene change to significantly improve the coding efficiency of an MPEG encoder. In a preprocessing stage, the change in the sum of pixel differences between consecutive odd fields, or consecutive even fields, is calculated for every consecutive input field. A scene change is detected when a large positive value in the change of sum is followed by a large negative value therein. A decision of which picture type to use is not made until a final encoding stage. I-frames can be inhibited when an encoder buffer level is too high.

A watchdog counter resets the scene change indication to avoid a perpetual scene change state for transitions from still to motion.

For an MPEG film mode frame that is determined to be a scene change frame, the MPEG-recommended frame-based Discrete Cosine Transform (DCT) and prediction encoding is deactivated when a scene change may have occurred on a field boundary (e.g., when there is no redundant field in the picture). Upon such deactivation, either frame- or field-based DCT and prediction can be use on a macroblock-by-macroblock basis in the picture.

While various syntax elements have been discussed herein, note that they are examples only, and any syntax may be used.

**Claims**

1. A method for encoding a digital video signal having successive video frames, comprising the steps of:

   preprocessing (205) the video signal to calculate, for each successive frame, a first sum of pixel differences between a first field thereof and a first field of a previous frame, and a second sum of pixel differences between a second field thereof and a second field of the previous frame;

   calculating (210), for each successive frame, a change in the first and second sums thereof relative to the first and second sums, respectively, of the previous frame;

   **characterized by**

   designating (210) a particular one of the successive frames as a scene change frame when the change in at least one of the first or second sums thereof exceeds a positive threshold (ThPos), and a change in at least one of the first or second sums of a subsequent frame is less than a negative threshold (ThNeg);

   wherein the video signal is processed using a pipeline architecture that provides a lookahead buffer capability for encoding the successive video frames.

2. The method of claim 1, comprising the further step of:

   inhibiting the encoding of a intra-coded (I) frames when the scene change frame has been designated.

3. The method of claim 1, comprising the further steps of:

   maintaining a count of a number of consecutive scene change frames; and

   terminating the scene change designation of the scene change frame for which the count exceeds a maximum value to avoid remaining in a perpetual scene change state for a still-to-motion video transition.

4. The method of claim 1, comprising the further step of:

   maintaining a count of a number of uncoded scene change frames currently in a processing pipeline of a video encoder.

5. The method of claim 4, comprising the further step of:

   inhibiting the encoding of intra-coded (I) frames for as long as the count has a value greater than zero, except for the last scene change frame in a burst of scene change frames.

6. The method of claim 1, wherein said pipeline architecture includes: (a) a preprocessing stage, wherein said preprocessing, calculating and designating steps occur, and (b) an encoding stage, wherein each frame is encoded, said method comprising the further step of:

   changing a pre-assigned picture type of one of the frames at the encoding stage in response to said designating step.

7. The method of claim 6, wherein:

   the pre-assigned picture type for the scene change frame, which is a P-frame, is changed to an I-frame in said changing step.

8. The method of claim 6, wherein:

the scene change frame is a B-frame, and the pre-assigned picture type for the next successive P-frame is changed to an I-frame in said changing step.

9. The method of claim 1, comprising the further step of:

commencing the encoding of a new group of pictures (GOP) according to when the scene change frame has been designated.

10. The method of claim 1, wherein the scene change frame is a film mode frame, comprising the further steps of:

determining whether a scene change boundary between first and second fields of the film mode frame is indicated; and
allowing both frame- and field-based prediction and Discrete Cosine Transform (DCT) encoding of the film mode frame on a macroblock-by-macroblock basis when said boundary is indicated in said determining step.

11. The method of claim 10, wherein:

said determining step determines that a scene change boundary between the first and second fields of the film mode frame is indicated when there are no repeated fields in the film mode frame.

12. The method of claim 10, comprising the further step of:

allowing only frame-based prediction and Discrete Cosine Transform (DCT) encoding of the film mode frame when said determining step determines that a scene change boundary between the first and second fields of the film mode frame is not indicated.

13. The method of claim 12, wherein:

said determining step determines that a scene change boundary between the first and second fields of the film mode frame is hot indicated when there is a repeated field in the film mode frame.

14. The method of claim 1, comprising the further steps of:

monitoring a fullness level of a buffer that receives encoded data of the video signal; and
inhibiting the encoding of intra-coded (I) frames according to when the fullness level exceeds a maximum value.

15. The method of claim 1, comprising the further step of:

inhibiting the encoding of intra-coded (I) frames when the scene change frame has been designated until the scene change frame is encoded and there are no other scene change frames designated but not yet encoded.

16. An apparatus for encoding a digital video signal having successive video frames, comprising:

a preprocessor (205) for preprocessing the video signal to calculate, for each successive frame, a first sum of pixel differences between a first field thereof and a first field of a previous frame, and a second sum of pixel differences between a second field thereof and a second field of the previous frame;
means (210) for calculating, for each successive frame, a change in the first and second sums thereof relative to the first and second sums, respectively, of the previous frame;
**characterized by**
a scene change detector (210) for designating a particular one of the successive frames as a scene change frame when the change in at least one of the first or second sums thereof exceeds a positive threshold (ThPos), and a change in at least one of the first or second sums of a subsequent frame is less than a negative threshold (ThNeg).

**Patentansprüche**

1.  Ein Verfahren zum Codieren eines digitalen Videosignals mit sukzessiven Videoeinzelbildern, das die folgenden Schritte beinhaltet:

    Vorverarbeiten (205) des Videosignals zum Berechnen, für jedes sukzessive Einzelbild, einer ersten Summe von Pixeldifferenzen zwischen einem ersten Halbbild davon und einem ersten Halbbild eines vorangegangenen Einzelbilds und einer zweiten Summe von Pixeldifferenzen zwischen einem zweiten Halbbild davon und einem zweiten Halbbild des vorangegangenen Einzelbilds;
    Berechnen (210), für jedes sukzessive Einzelbild, einer Änderung der ersten und zweiten Summe davon im Verhältnis zu der ersten bzw. zweiten Summe des vorangegangenen Einzelbilds;
    **gekennzeichnet durch**:

    Designieren (210) eines bestimmten Einzelbilds der sukzessiven Einzelbilder als Szenenwechseleinzelbild, wenn die Änderung in mindestens einer der ersten oder zweiten Summe davon einen positiven Grenzwert (ThPos) überschreitet und eine Änderung in mindestens einer der ersten oder zweiten Summe eines nachfolgenden Einzelbilds weniger ist als ein negativer Grenzwert (ThNeg);
    wobei das Videosignal mittels einer Pipeline-Architektur verarbeitet wird, die eine Vorausschaupuffer-Fähigkeit zum Codieren der sukzessiven Videoeinzelbilder bietet.

2.  Verfahren gemäß Anspruch 1, das den folgenden weiteren Schritt beinhaltet:

    Sperren des Codierens von intra-codierten (I) Einzelbildern, wenn das Szenenwechseleinzelbild designiert wurde.

3.  Verfahren gemäß Anspruch 1, das die folgenden weiteren Schritte beinhaltet:

    Aufrechterhalten einer Zählung einer Zahl von hintereinander folgenden Szenenwechseleinzelbildern; und Beenden der Szenenwechseldesignierung des Szenenwechseleinzelbilds, für das die Zählung einen Höchstwert überschreitet, um zu vermeiden, für einen Standbild-in-Bewegtbild-Übergang in einem dauernden Szenenwechselzustand zu bleiben.

4.  Verfahren gemäß Anspruch 1, das den folgenden weiteren Schritt beinhaltet:

    Aufrechterhalten einer Zählung einer Zahl von uncodierten Szenenwechseleinzelbildern, die gerade in einer Verarbeitungspipeline eines Videocodierers sind.

5.  Verfahren gemäß Anspruch 4, das den folgenden weiteren Schritt beinhaltet:

    Sperren des Codierens von intra-codierten (I) Einzelbildern, solange die Zählung einen Wert größer als null hat, außer für das letzte Szenenwechseleinzelbild in einem Schub von Szenenwechseleinzelbildern.

6.  Verfahren gemäß Anspruch 1, wobei die Pipeline-Architektur Folgendes beinhaltet: (a) eine Vorverarbeitungsstufe, in der die Vorverarbeiten-, Berechnen- und Designieren-Schritte erfolgen, und (b) eine Codierungsstufe, in der jedes Einzelbild codiert wird, wobei das Verfahren den folgenden weiteren Schritt beinhaltet:

    Ändern eines vorab zugewiesenen Bildtyps von einem der Einzelbilder in der Codierungsstufe als Reaktion auf den Designieren-Schritt.

7.  Verfahren gemäß Anspruch 6, wobei:

    der vorab zugewiesene Bildtyp für das Szenenwechseleinzelbild, das ein P-Einzelbild ist, im Ändern-Schritt auf ein I-Einzelbild geändert wird.

8.  Verfahren gemäß Anspruch 6, wobei:

    das Szenenwechseleinzelbild ein B-Einzelbild ist und der vorab zugewiesene Bildtyp für das nächste sukzessive P-Einzelbild im Ändern-Schritt auf ein I-Einzelbild geändert wird.

9. Verfahren gemäß Anspruch 1, das den folgenden weiteren Schritt beinhaltet:

   Beginnen des Codierens einer neuen Gruppe von Bildern (GOP, Group of Pictures), je nachdem, wann das Szenenwechseleinzelbild designiert wurde.

10. Verfahren gemäß Anspruch 1, wobei das Szenenwechseleinzelbild ein Filmmoduseinzelbild ist, das die folgenden weiteren Schritte beinhaltet:

    Bestimmen, ob eine Szenenwechselgrenze zwischen dem ersten und zweiten Halbbild des Filmmoduseinzelbilds angezeigt ist; und
    Ermöglichen von einzelbild- sowie halbbildbasierter Prädiktionscodierung und Diskrete-Cosinustranformations-Codierung (DCT-Codierung) des Filmmoduseinzelbilds auf Makroblockbasis, wenn im Bestimmen-Schritt die Grenze angezeigt ist.

11. Verfahren gemäß Anspruch 10, wobei:

    der Bestimmen-Schritt bestimmt, dass eine Szenenwechselgrenze zwischen dem ersten und zweiten Halbbild des Filmmoduseinzelbilds angezeigt ist, wenn im Filmmoduseinzelbild keine wiederholten Halbbilder vorliegen.

12. Verfahren gemäß Anspruch 10, das den folgenden weiteren Schritt beinhaltet:

    Ermöglichen von nur einzelbildbasierter Prädiktions-Codierung und Diskrete-Cosinustranformations-Codierung (DCT-Codierung) des Filmmoduseinzelbilds, wenn im Bestimmen-Schritt bestimmt wird, dass keine Szenenwechselgrenze zwischen dem ersten und zweiten Halbbild des Filmmoduseinzelbilds angezeigt ist.

13. Verfahren gemäß Anspruch 12, wobei:

    der Bestimmen-Schritt bestimmt, dass keine Szenenwechselgrenze zwischen dem ersten und zweiten Halbbild des Filmmoduseinzelbilds angezeigt ist, wenn im Filmmoduseinzelbild ein wiederholtes Halbbild vorliegt.

14. Verfahren gemäß Anspruch 1, das die folgenden weiteren Schritte beinhaltet:

    Kontrollieren eines Füllstands eines Puffers, der codierte Daten des Videosignals empfängt; und
    Sperren des Codierens von intra-codierten (I) Einzelbildern je nachdem, wann der Füllstand einen Höchstwert überschreitet.

15. Verfahren gemäß Anspruch 1, das den folgenden weiteren Schritt beinhaltet:

    Sperren des Codierens von intra-codierten (I) Einzelbildern, wenn das Szenenwechseleinzelbild designiert wurde, bis das Szenenwechseleinzelbild codiert ist und es keine anderen Szenenwechseleinzelbilder gibt, die designiert, aber noch nicht codiert sind.

16. Eine Vorrichtung zum Codieren eines digitalen Videosignals mit sukzessiven Videoeinzelbildern, die Folgendes beinhaltet:

    einen Präprozessor (205) zum Vorverarbeiten des Videosignals zum Berechnen, für jedes sukzessive Einzelbild, einer ersten Summe von Pixeldifferenzen zwischen einem ersten Halbbild davon und einem ersten Halbbild eines vorangegangenen Einzelbilds und einer zweiten Summe von Pixeldifferenzen zwischen einem zweiten Halbbild davon und einem zweiten Halbbild des vorangegangenen Einzelbilds;
    Mittel (210) zum Berechnen, für jedes sukzessive Einzelbild, einer Änderung der ersten und zweiten Summe davon im Verhältnis zu der ersten bzw. zweiten Summe des vorangegangenen Einzelbilds;
    **gekennzeichnet durch**:

    einen Szenenwechseldetektor (210) zum Designieren eines bestimmten Einzelbilds der sukzessiven Einzelbilder als Szenenwechseleinzelbilds, wenn die Änderung in mindestens einer der ersten oder zweiten Summe davon einen positiven Grenzwert (ThPos) überschreitet und eine Änderung in mindestens einer der ersten oder zweiten Summe eines nachfolgenden Einzelbilds weniger ist als ein negativer Grenzwert (ThNeg).

**Revendications**

1.  Un procédé de codage d'un signal vidéo numérique comportant des images vidéo successives, comprenant les étapes consistant à :

    prétraiter (205) le signal vidéo pour calculer, pour chaque image successive, une première somme de différences de pixels entre un premier champ de celle-ci et un premier champ d'une image précédente, et une deuxième somme de différences de pixels entre un deuxième champ de celle-ci et un deuxième champ de l'image précédente ;
    calculer (210), pour chaque image successive, un changement dans les première et
    deuxième sommes de celle-ci par rapport aux première et deuxième sommes, respectivement, de l'image précédente ;
    **caractérisé en ce que**
    on désigne (210) une image particulière parmi les images successives comme étant une image de changement de scène lorsque le changement dans l'une au moins des première et deuxième sommes de celle-ci dépasse un seuil positif (ThPos) et lorsqu'un changement dans l'une au moins des première et deuxième sommes d'une image suivante est inférieur à un seuil négatif (ThNeg) ;
    le signal vidéo étant traité à l'aide d'une architecture pipeline qui fournit une capacité de tampon à lecture anticipée pour coder les images vidéo successives.

2.  Le procédé de la revendication 1 comprenant en outre l'étape consistant à :

    empêcher le codage d'images à codage interne (images I) lorsque l'image de changement de scène a été désignée.

3.  Le procédé de la revendication 1 comprenant les étapes supplémentaires consistant à :

    maintenir un compteur d'un nombre d'images de changement de scène consécutives ; et
    mettre fin à la désignation de changement de scène de l'image de changement de scène pour laquelle le compteur dépasse une valeur maximale afin d'éviter de rester dans un état de changement de scène perpétuel lors d'une transition d'une image vidéo fixe à une image vidéo animée.

4.  Le procédé de la revendication 1 comprenant l'étape supplémentaire consistant à :

    maintenir un compteur d'un nombre d'images de changement de scène non codées actuellement présentes dans un pipeline de traitement d'un codeur vidéo.

5.  Le procédé de la revendication 4 comprenant l'étape supplémentaire consistant à :

    empêcher le codage d'images à codage interne (images I) tant que la valeur du compteur est supérieure à zéro, sauf pour la dernière image de changement de scène dans une série d'images de changement de scène.

6.  Le procédé de la revendication 1 dans lequel ladite architecture pipeline inclut : (a) une phase de prétraitement dans laquelle se produisent lesdites étapes de prétraitement, de calcul et de désignation, et (b) une phase de codage dans laquelle chaque image est codée, ledit procédé comprenant l'étape supplémentaire consistant à :

    changer un type d'image pré-attribué de l'une des images de la phase de codage comme suite à ladite étape de désignation.

7.  Le procédé de la revendication 6 dans lequel :

    le type d'image pré-attribué pour l'image de changement de scène, qui est une image P, est changé en image I à ladite étape de changement.

8.  Le procédé de la revendication 6 dans lequel :

    l'image de changement de scène est une image B et le type d'image pré-attribué pour la prochaine image P est changé en image I à ladite étape de changement.

9. Le procédé de la revendication 1 comprenant l'étape supplémentaire consistant à :

   commencer le codage d'un nouveau groupe d'images (GOP) en fonction du moment où l'image de changement de scène a été désignée.

10. Le procédé de la revendication 1 dans lequel l'image de changement de scène est une image en mode film, comprenant les étapes supplémentaires consistant à :

    déterminer si une limite de changement de scène entre les premier et deuxième champs de l'image en mode film est indiquée ; et
    permettre tout à la fois la prédiction par image et par champ et le codage par transformée en cosinus discrète (DCT, Discrete Cosine Transform) de l'image en mode film, macrobloc par macrobloc, lorsque ladite limite est indiquée à ladite étape de détermination.

11. Le procédé de la revendication 10, dans lequel :

    ladite étape de détermination établit qu'une limite de changement de scène entre les premier et deuxième champs de l'image en mode film est indiquée lorsqu'il n'y a pas de champs répétés dans l'image en mode film.

12. Le procédé de la revendication 10 comprenant l'étape supplémentaire consistant à:

    permettre uniquement la prédiction par images et le codage par transformée en cosinus discrète (DCT) de l'image en mode film lorsque ladite étape de détermination établit qu'une limite de changement de scène entre les premier et deuxième champs de l'image en mode film n'est pas indiquée.

13. Le procédé de la revendication 12 dans lequel :

    ladite étape de détermination établit qu'une limite de changement de scène entre les premier et deuxième champs de l'image en mode film n'est pas indiquée lorsqu'il y a un champ répété dans l'image en mode film.

14. Le procédé de la revendication 1 comprenant les étapes supplémentaires consistant à :

    surveiller un niveau de remplissage d'un tampon qui reçoit des données codées du signal vidéo ; et
    empêcher le codage d'images à codage interne (images I) lorsque le niveau de remplissage dépasse une valeur maximale.

15. Le procédé de la revendication 1 comprenant l'étape supplémentaire consistant à :

    empêcher le codage d'images à codage interne (images I) lorsque l'image de changement de scène a été désignée jusqu'à ce que l'image de changement de scène soit codée et qu'il n'existe pas d'autres images de changement de scène désignées mais pas encore codées.

16. Un appareil de codage d'un signal vidéo numérique comportant des images vidéo successives, comprenant :

    un préprocesseur (205) pour prétraiter le signal vidéo pour calculer, pour chaque image successive, une première somme de différences de pixels entre un premier champ de celle-ci et un premier champ d'une image précédente, et une deuxième somme de différences de pixels entre un deuxième champ de celle-ci et un deuxième champ de l'image précédente ;
    un moyen (210) permettant de calculer, pour chaque image successive, un changement dans les première et deuxième sommes de celle-ci par rapport aux première et deuxième sommes, respectivement, de l'image précédente ;
    **caractérisé par**
    un détecteur de changement de scène (210) pour désigner une image particulière parmi les images successives comme étant une image de changement de scène lorsque le changement dans l'une au moins des première et deuxième sommes de celle-ci dépasse un seuil positif (ThPos) et lorsqu'un changement dans l'une au moins des première et deuxième sommes d'une image suivante est inférieur à un seuil négatif (ThNeg).

FIG.1

FIG.2

CALCULATE
sc1 AND sc2 ⟶ 300

305

YES —— sc1>Th0? —— NO

310

YES —— sc2>Th0? —— NO

315

YES —— sc2>Th0? —— NO

320

d1=sc1−scLast
d2=sc2−sc1
scLast=sc2
rfc=0

325

d1=sc1−scLast
d2=sc2−sc1
scLast=sc1
rfc=1

330

d1=sc1−scLast
d2=sc2−scLast
scLast=sc2
rfc=0

335

YES —— rfc>maxCount
? —— NO

340

d1=sc1−scLast
d2=sc2−sc1
scLast=sc2
rfc unchanged

350

d1=sc1−scLast
d2=sc2−scLast
scLast unchanged
rfc increased by 2

FIG.3

FIG.4

400 — Calculate d1, d2 AND scLast

405 — CountDown>0 ?
- NO → ScDet=0 (415)
- YES → Decrease CountDown by 1 (410)

420 — ScDet=1 AND d2<ThNeg AND CountDown>0?
- YES → ScDet=0 CountDown=0 (425)
- NO → 430

430 — d1>ThPos OR d2>ThPos?
- YES → ScDet=1 CountDown=0 (435)
- NO → 440

440 — d1<ThPos OR d2<ThPos?
- YES → ScDet=0 CountDown=0 (445)
- NO → ScDet Uncharged (450)

FIG.5

Retrieve
scene_change flag
and preType for the
frame at encoding
stage — 600

scene_change
=1? — 605

YES → Decrease ScCount
by 1 — 610

NO

FrameCount>
MaxGopLen? — 615

YES

NO

buffer_level>ThBuf
? — 625

YES

NO

ScDet==1
OR
ScCount>0? — 635

YES

NO

FIG.6A

| FIG.6A |
|--------|
| FIG.6B |

FIG.6

FIG.6B

**EP 1 119 979 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 10223498 P
- EP 0708564 A2